# DEMANDE DE BREVET EUROPEEN

(11) **EP 1 968 016 A1**
(43) Date de publication de la demande: **10.09.2008**
(21) Numéro de dépôt: 08102337.6
(22) Date de dépôt: 06.03.2008
(51) Int. Cl.: G06T 11/00

(54) **Système interactif d'aide à la sélection de produits cosmétiques**

(30) Priorité: 08.03.2007 FR 0701699
(71) Demandeur: Sagem Telecommunications, 75015 Paris (FR)
(72) Inventeur: Berger, Jérôme, 75015 Paris (FR); Sabatier, Pierre, 75015 Paris (FR)
(74) Mandataire: Cabinet Plasseraud

(57) **Abrégé**

Dispositif de simulation d'application d'un cosmétique sur un utilisateur comportant :
- une caméra (2) adaptée pour acquérir au moins une image dudit utilisateur,
- un écran (4) de visualisation positionné pour qu'une image affichée soit visible par ledit utilisateur,
- des moyens (9) de traitement d'image adaptés pour visualiser l'application virtuelle sur l'utilisateur du cosmétique à partir du ou des images acquises par la caméra ;
- des moyens (8) de calibrage colorimétrique connectés en série entre ladite caméra et les moyens de traitement d'image pour réaliser une première transformation colorimétrique de chaque image provenant de la caméra ;
- des moyens (10) de modification colorimétrique connectés en série entre les moyens de traitement d'image et l'écran de visualisation pour réaliser une seconde transformation colorimétrique des images issues des moyens de traitement d'image, cette seconde transformation étant prédéfinie pour correspondre à un environnement particulier.

## Description

La présente invention concerne un dispositif et un procédé de simulation d'application d'un cosmétique sur un utilisateur. Elle concerne également un produit programme d'ordinateur pour mettre en oeuvre le procédé.

On connait de nombreux systèmes de simulation destinés à aider un client à choisir un cosmétique tel que, par exemple, une teinture capillaire.

Le cosmétique est de tout type modifiant l'apparence de l'utilisateur tel que, par exemple, outre les teintures capillaires, les fonds de teint et produits de maquillage.

Par exemple, la demande internationale de brevet n° 96/21201 décrit un dispositif comportant une unité d'acquisition permettant d'acquérir une image 2D d'un visage et des moyens de traitement d'image afin de visualiser l'application virtuelle sur ce visage d'un cosmétique.

Les dispositifs connus ne permettent pas de tenir compte des conditions d'éclairage de l'utilisateur, or le rendu du maquillage dépend entre autre du type de lumière éclairant le sujet.

Pour gérer ce problème, les systèmes actuels sont installés dans des cabines ou lieux fermés dans lesquels les conditions d'éclairage sont strictement définies et calibrées.

Ces systèmes ont l'inconvénient d'être encombrants. Cela limite leur utilisation dans des lieux comme les hypermarchés dans lesquels l'espace disponible est cher.

Le document US2002/155069 divulgue un dispositif de simulation d'application d'un cosmétique sur un utilisateur comportant une caméra permettant de prendre une image d'un utilisateur, cette image étant envoyée à une unité de traitement pour simuler l'application d'un cosmétique et le résultat de cette simulation étant montré à l'utilisateur sur un écran pour accord.

De façon à garantir la reproductibilité de la simulation, ce dispositif comporte des moyens de calibration colorimétrique de la caméra et de l'écran.

Aussi, est-il souhaitable de pouvoir réaliser un système peu encombrant qui puisse tenir compte des conditions d'éclairage, et plus généralement d'un environnement prédéterminé.

Pour résoudre ce problème, dans un aspect de l'invention, un système de simulation d'application d'un cosmétique sur un utilisateur comporte :
- une caméra adaptée pour acquérir au moins une image dudit utilisateur,
- un écran de visualisation positionné pour que l'image affichée soit visible par ledit utilisateur,
- des moyens de traitement d'image adaptés pour visualiser l'application virtuelle sur l'utilisateur du cosmétique à partir du ou des images acquises par la caméra,
- des moyens de calibrage colorimétrique connectés en série entre ladite caméra et les moyens de traitement d'image pour réaliser une première transformation colorimétrique de chaque image provenant de la caméra ;
- des moyens de modification colorimétrique connectés en série entre les moyens de traitement d'image et l'écran de visualisation pour réaliser une seconde transformation colorimétrique des images issues des moyens de traitement d'image, la seconde transformation colorimétrique étant prédéfinie pour correspondre à un environnement particulier.

Ce système permet avantageusement de fournir aux moyens de traitement, une image dans laquelle les aberrations chromatiques liées à l'éclairage sont corrigées.

Avantageusement, l'image proposée à l'utilisateur peut être colorée pour illustrer l'application du cosmétique dans différentes conditions d'éclairage. Par exemple, il est possible de simuler un éclairage naturel permettant à l'utilisateur de se rendre compte de son aspect dans un environnement extérieur s'il utilise ce cosmétique.

Dans un mode de réalisation particulier, les moyens de calibration fournissent aux moyens de traitement une image ayant un rendu colorimétrique prédéterminé, équivalant à une prise d'image dans un environnement à l'éclairage contrôlé, sans l'inconvénient d'avoir à installer une cabine fermée.

Moyennant une calibration initiale avec une mire colorimétrique adaptée, le système fonctionne avantageusement dans n'importe quelle condition environnementale et en particulier dans des magasins dont l'éclairage a une forte composante colorée.

Dans un autre aspect de l'invention, un procédé de simulation d'application d'un cosmétique sur un utilisateur comporte les étapes de :
- acquisition d'au moins une image de l'utilisateur par une caméra,
- calibrage colorimétrique de ladite image,
- traitement de l'image calibrée pour appliquer virtuellement sur l'image de l'utilisateur ledit cosmétique,
- modification colorimétrique de l'image traitée, modification prédéfinie pour correspondre à un environnement particulier,
- visualisation de l'image ainsi modifiée sur un écran disposé pour que l'image soit visible par l'utilisateur.

L'invention sera mieux comprise à la lecture de la description qui suit, donnée uniquement à titre d'exemple, et faite en référence aux figures en annexe dans lesquelles :
- la figure 1 est une vue schématique d'un dispositif de simulation selon un mode de réalisation de l'invention ; et
- la figure 2 est un ordinogramme d'un procédé de simulation selon un mode de réalisation de l'invention.

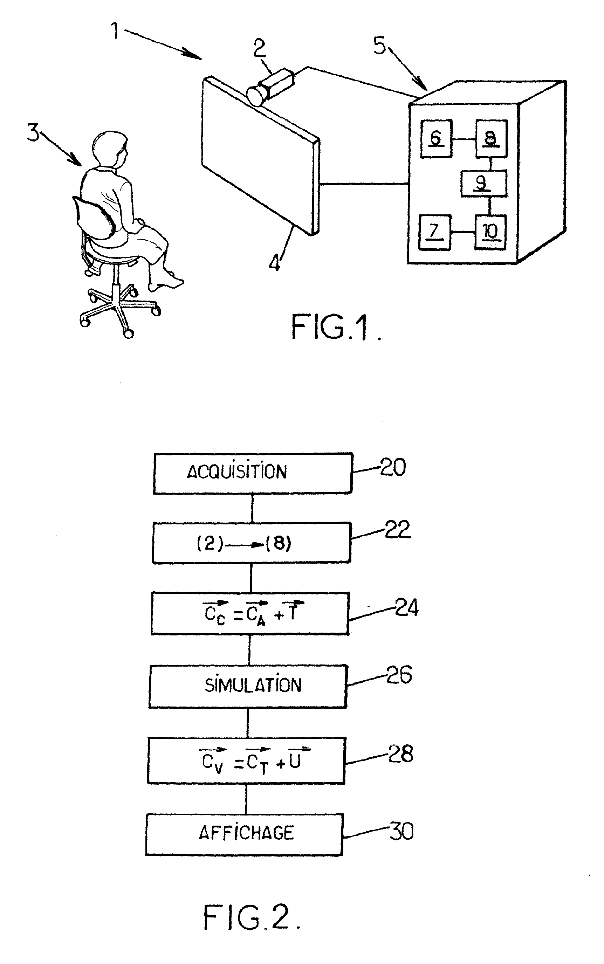

En référence à la figure 1, un dispositif 1 comporte une caméra 2 dirigée vers un utilisateur 3. Cette caméra 2 est par exemple un appareil photographique numérique ou une caméra CCD numérique.

A côté de la caméra 2 est installé un écran 4 orienté de telle sorte que l'utilisateur 3 visualise l'image affichée par l'écran 4. L'écran 4 est par exemple un écran à cristaux liquides LCD (*Liquid Crystal Display*).

Un ordinateur 5 est connecté à la caméra 2 et à l'écran 4 par l'intermédiaire de moyens 6 d'acquisition d'image et de moyens 7 de pilotage d'image respectivement.

Les moyens 6 d'acquisition d'image sont par exemple composés d'une interface IEEE 1384 « Firewire » ou une interface USB (*Universal Serial Bus -* Bus série universel) quand la camera 2 est une caméra numérique. Lorsque la caméra 2 est une caméra de type analogique, par exemple au format VHS, les moyens 6 d'acquisition comportent une carte de conversion analogique-numérique pour convertir l'image analogique en un fichier de données numériques.

Les moyens 7 de pilotage d'image comportent classiquement une connexion VGA pour envoyer les signaux de pilotage à l'écran 4.

L'ordinateur 5 comporte également, connectés aux moyens 6 d'acquisition, des moyens 8 de calibrage colorimétrique, également connectés à des moyens 9 de traitement d'image.

Les moyens 9 du traitement d'images sont connectés également aux moyens 7 de pilotage d'image par l'intermédiaire de moyens 10 de modification colorimétrique.

Les moyens 8 de calibrage colorimétrique, les moyens 9 de traitement d'image et les moyens 10 de modification colorimétrique sont réalisés, par exemple, sous forme de modules logiciels exécutés sur l'ordinateur 5.

En référence à la figure 2, le fonctionnement du dispositif 1 est le suivant.

L'utilisateur 3 s'installe face à la caméra 2 de façon à ce que celle-ci prenne, à l'étape 20, au moins une image de l'utilisateur, en privilégiant la tête de celui-ci.

L'image est transmise, à l'étape 22, aux moyens 8 de calibrage colorimétrique, sous forme, par exemple, d'un fichier de données numériques par les moyens 6 d'acquisition.

Le fichier de données numériques contient une représentation de l'image codée selon l'un des nombreux standards graphiques, bien connus de l'homme du métier.

Par exemple, le fichier est dans un format « bitmap » dans lequel l'image est décomposée en une matrice de points, chaque point comportant sur un ensemble d'octets les valeurs des trois couleurs primaires utilisées pour définir la couleur du point.

A l'étape 24, les moyens 8 de calibrage colorimétrique font subir une première transformation colorimétrique au fichier de données.

Cette transformation colorimétrique peut être définie comme une transformation T̅ dans l'espace à 3 ou 4 dimensions des couleurs primaires.

Cette transformation T̅ est, par exemple, un produit matriciel ou une transformation plus complexe définie dans un profil ICC et mettant en oeuvre des tables de correction Gamma, voire des tables de conversion définies couleur par couleur.

A l'étape 26, les moyens 9 de traitement d'image appliquent virtuellement sur l'image de l'utilisateur le cosmétique. Par exemple, les moyens 9 de traitement d'image mettent en oeuvre l'enseignement de la demande de brevet WO96/21201.

L'image de l'utilisateur retravaillée par les moyens 9 de traitement d'image subit, à l'étape 28, une seconde transformation colorimétrique *U̅* par les moyens 10 de modification colorimétrique avant d'être affichée, à l'étape 30, sur l'écran 4 par l'intermédiaire des moyens 7 de pilotage d'image.

Dans un mode particulier de réalisation, la première transformation colorimétrique effectuée à l'étape 24 est destinée à fournir aux moyens 9 de traitement d'image une image correspondant à un éclairage étalonné.

Classiquement, dans un équipement de traitement d'image comprenant au moins un dispositif d'acquisition, un calculateur et au moins un dispositif de visualisation, tous ces équipements sont calibrés de telle sorte qu'une couleur déterminée ait le même rendu à toutes les étapes du traitement. On utilise, par exemple, les profils ICC qui contiennent des informations colorimétriques sous forme de coordonnées colorimétriques dans un espace de couleurs normalisé. Ils servent à faire le lien entre des coordonnées théoriques des couleurs que l'on souhaiterait atteindre, et les coordonnées colorimétriques des couleurs effectivement atteintes par le périphérique.

La définition d'un profil ICC pour un équipement se fait par une opération de calibrage qui peut être réalisée en usine.

Une chaine de traitement ainsi calibrée permet de garantir l'absence d'aberration chromatique ainsi qu'une reproduction homogène des couleurs sur tous les périphériques.

Le dispositif de simulation 1 est également calibré en usine pour assurer la cohérence colorimétrique entre la caméra 2, les traitements effectués par l'ordinateur 5 et l'écran 4.

Cependant, le dispositif de simulation 1 est destiné à être installé, par exemple, dans des magasins dont l'environnement colorimétrique lié en particulier à l'éclairage n'est pas contrôlé. Or, il est connu de l'homme du métier, qu'en fonction de la température de l'éclairage, celui-ci peut avoir une dominante de couleur allant du rouge au bleu avec l'élévation de la température.

Pour que les moyens 9 de traitement d'images puissent réaliser un travail cohérent, il est donc souhaitable de corriger l'image à traiter des aberrations colorimétriques liées, entre autre, à l'éclairage et de fournir une image correspondant à un éclairage théorique normalisé.

La détermination des paramètres de la première transformation colorimétrique correspondant à cette opération de calibrage est effectuée, par exemple, en présentant à la caméra une mire colorimétrique telle qu'une mire colorimétrique Macbeth. A cette mire est associée un fichier de valeurs théoriques correspondant à chaque couleur de la mire. La calibration consiste alors à calculer les différences, dans l'espace des couleurs, entre les valeurs acquises par la caméra 2 et les valeurs théoriques. Selon une méthodologie bien connue de l'homme du métier, on déduit de ces différences un profil de transformation dans l'espace des couleurs.

Ce profil est alors appliqué sur les images fournies aux moyens 9 de traitement d'image afin que les couleurs de celles-ci correspondent aux couleurs théoriques. L'homme du métier comprend donc que ce profil s'ajoute au profil éventuel lié à la calibration en usine des éléments du dispositif de simulation 1.

Dans un mode de réalisation particulier, les moyens 10 de modification colorimétrique procède à une transformation correspondant à la transformation opposée à celle des moyens 8 de calibrage.

Ainsi, l'écran 4 présente à l'utilisateur une image qui reproduit l'éclairage, ou le défaut colorimétrique de l'éclairage. Cela permet d'obtenir une sorte d'effet miroir, l'utilisateur se voyant maquillé dans le contexte du lieu où il effectue le test, c'est-à-dire le magasin.

Dans d'autres modes de réalisation, les moyens 10 de modification colorimétrique appliquent une transformation prédéfinie correspondant à des environnements prédéterminés que l'utilisateur sélectionne ou non par l'intermédiaire d'un menu.

Par exemple, les environnements prédéterminés correspondent à une journée d'été ensoleillée, à un ciel couvert, à une ambiance de discothèque, etc.

L'homme du métier sait, à partir des descriptions de ces modes de réalisation et des revendications, réaliser d'autres variantes de réalisation.

Par exemple, plutôt qu'une réalisation sous forme de logiciel, il peut réaliser les traitements sous forme de composants électroniques en utilisant, par exemple, des technologies de type FPGA (*Field Programmable Gate Arrays -* Réseau de portes programmable sur le terrain).

De même, au lieu d'une seule caméra fixe, il peut utiliser plusieurs caméras ou une caméra mobile pour obtenir des effets 3D ou pour présenter des images de l'utilisateur sous différents angles.

On a ainsi décrit un dispositif et un procédé de simulation d'application d'un cosmétique sur un utilisateur qui permet de s'affranchir des variations d'éclairage du lieu d'installation du dispositif ainsi que de s'adapter à des environnements variés, sans nécessiter de moyens encombrants et donc chers.

## Revendications

1. Dispositif de simulation d'application d'un cosmétique sur un utilisateur comportant :
- une caméra (2) adaptée pour acquérir au moins une image dudit utilisateur,
- un écran (4) de visualisation positionné pour qu'une image affichée soit visible par ledit utilisateur,
- des moyens (9) de traitement d'image adaptés pour visualiser l'application virtuelle sur l'utilisateur du cosmétique à partir du ou des images acquises par la caméra ;
- des moyens (8) de calibrage colorimétrique connectés en série entre ladite caméra et les moyens de traitement d'image pour réaliser une première transformation colorimétrique de chaque image provenant de la caméra ;
- des moyens (10) de modification colorimétrique connectés en série entre les moyens de traitement d'image et l'écran de visualisation pour réaliser une seconde transformation colorimétrique des images issues des moyens de traitement d'image,
**caractérisé en ce que** la seconde transformation colorimétrique est prédéfinie pour correspondre à un environnement prédéterminé.

2. Dispositif selon la revendication 1, **caractérisé en ce que** les moyens de calibrage colorimétrique sont adaptés pour fournir aux moyens de traitement d'image une ou des images correspondant à un rendu colorimétrique standardisé.

3. Dispositif selon la revendication 2, **caractérisé en ce que** les moyens de calibrage colorimétrique sont étalonnés par présentation d'une mire colorimétrique étalon devant la caméra et comparaison différentielle de l'image de la mire fournie par la caméra avec une image de référence.

4. Dispositif selon l'une des revendications 1 à 3, **caractérisé en ce que** la seconde transformation colorimétrique est une fonction opposée de la première transformation colorimétrique réalisée par les moyens de calibration pour correspondre à l'environnement d'acquisition de l'image de l'utilisateur.

5. Procédé de simulation d'application d'un cosmétique sur un utilisateur comportant les étapes de :
- acquisition d'au moins une image de l'utilisateur par une caméra,
- calibrage colorimétrique de ladite image,
- traitement de l'image calibrée pour appliquer virtuellement sur l'image de l'utilisateur ledit cosmétique,
- modification colorimétrique de l'image traitée,
- visualisation de l'image ainsi modifiée sur un écran disposé pour que l'image soit visible par l'utilisateur
**caractérisé en ce que** la modification colorimétrique est prédéfinie pour correspondre à un environnement particulier.

6. Procédé selon la revendication 5, **caractérisé en ce que** le calibrage colorimétrique consiste à modifier les couleurs de l'image pour qu'elles correspondent à un rendu colorimétrique standardisé.

7. Procédé selon la revendication 6, **caractérisé en ce que** le procédé comporte une étape préalable d'étalonnage de l'étape de calibrage colorimétrique consistant à acquérir l'image d'une mire étalon par la caméra puis à faire une comparaison différentielle entre l'image de la mire et une image de référence.

8. Procédé selon l'une des revendications 5 à 7, **caractérisé en ce que** l'étape de modification colorimétrique consiste à appliquer une transformation colorimétrique opposée au calibrage colorimétrique pour correspondre à l'environnement d'acquisition de l'image de l'utilisateur.

9. Produit programme d'ordinateur comprenant des instructions de code de programme pour l'exécution des étapes du procédé selon l'une quelconque des revendications 5 à 8 lorsque ledit programme est exécuté sur un ordinateur.
